# EUROPEAN PATENT SPECIFICATION

(11) **EP 2 753 166 B1**
(45) Date of publication and mention of the grant of the patent: **26.08.2015**
(21) Application number: 12768706.9
(22) Date of filing: 03.09.2012
(51) Int. Cl.: A01F 21/00, A01F 15/07

(54) **BALE WRAPPER**
BALLENWICKLER
ENRUBANNEUSE

(30) Priority: 06.09.2011 GB 201115414
(43) Date of publication of application: 16.07.2014
(73) Proprietor: Kuhn-Geldrop BV, 5660 AA Geldrop (NL)
(72) Inventor: BULLENS, Henricus, Petrus, Gerardus, NL-5529 BB Casteren (NL); SPANJERS, Bart, Albertus, Adrianus, Maria, NL-5684 NR Best (NL)
(74) Representative: Raynor, Simon Mark
(86) International application number: PCT/EP2012/003677
(87) International publication number: WO 2013/034268

(56) References cited:
- EP-A1- 2 090 153
- WO-A1-96/12399
- GB-A- 2 159 489
- US-A1- 2003 089 081

## Description

The present invention relates to a bale wrapper apparatus for applying stretch film wrapping to the outer surface of an agricultural bale.

It is well known to apply stretch film wrapping to agricultural bales, in order to protect the contents of the bale from the weather and, in the case of silage crops, to form a substantially air and watertight enclosure within which the crop can mature or ferment to form silage.

The bale can be either cylindrical (called a "round" bale) or it can be a parallelepiped (called a "square" bale). In either case, the bale is generally wrapped by rotating the bale around a horizontal axis while at the same time providing relative rotation about a vertical axis between the bale and a dispenser of the wrapping film. This produces a series of overlapping layers, which cover the entire outer surface of the bale to form an air and watertight enclosure. Generally, multiple layers of film are applied to increase the puncture-resistance of the wrapper and improve its airtight properties.

There are two main types of bale wrapper in common usage, which are illustrated in Figures 5 and 6 of US 5,327,706. Figure 5 of US 5,327,706 illustrates a satellite-type bale wrapper in which the bale is rotated about a horizontal axis while the film dispenser rotates about a vertical axis around the bale. Figure 6 of US 5,327,706 illustrates a turntable-type bale wrapper apparatus in which the bale is located on a turntable that rotates about a vertical axis while at the same time rotating the bale about a horizontal axis, thereby applying film to the outer surface of the bale from a stationary film dispenser.

The present invention is particularly advantageous in relation to turntable-type bale wrappers, although it may also be applicable to satellite-type bale wrappers.

In a turntable-type bale wrapper the bale is placed on a turntable, which rotates around a substantially vertical axis. The turntable includes at least two parallel horizontally-placed rollers, of which at least one is driven. Usually, at least one endless belt is placed over the rollers for supporting a bale and/or driving the other roller. The bale wrapper also includes at least one stationary film dispenser.

In operation, a bale is placed on the turntable and the turntable is rotated about a substantially vertical axis. At the same time, the rollers are driven causing the bale to rotate at a slower rate about a substantially horizontal axis. As the bale rotates about the two orthogonal axes, wrapping film is drawn from the film dispenser producing a series of overlapping layers that cover the surface of the bale. At the end of the wrapping cycle, the turntable is inclined to tip the wrapped bale onto the ground, allowing a new bale to be wrapped.

The bale wrapper may include a pivotable loading arm that is operable to pick up an unwrapped bale from the ground and load it onto the turntable for wrapping. Such a device is described in GB 2159489A, wherein the arm pivots between a pickup position and a loading position.

In some bale wrappers, the loading arm also has a third operating position for carrying a bale prior to wrapping. The loading arm is therefore adjustable between three operating positions:
1. a pick up position for picking up a bale from the ground;
2. a carrying position for carrying a bale prior to wrapping, and
3. a loading position for loading the bale onto the turntable for wrapping.

Movement of the loading arm between these three operating positions can be controlled by a human operator using manually operable controls. However, monitoring operation of the bale wrapper and operating the loading arm requires the attention of the operator, who as a result cannot give full attention to other tasks, for example driving a tractor to transport the bale wrapper to the location of the next bale. This leads to operating inefficiencies.

It is also known to provide a bale wrapper in which the loading device includes a sensor that senses when a bale is ready to be picked up and actuates a lifting mechanism to lift the bale automatically onto the table for wrapping. This makes operation of the machine easier and requires less attention from the operator, but it does not allow for carrying a bale, for example while another bale is still being wrapped.

It is an object of the present invention to provide a bale wrapper apparatus that mitigates at least some of the aforesaid disadvantages.

According to one aspect of the present invention there is provided a bale wrapper apparatus including a table for supporting a bale during a wrapping process, a loading device for loading a bale onto the table, the loading device being configured for movement between a pick-up position, a carrying position and a loading position, and a control system that is configured to control operation of the loading device, the control system including a control unit, a bale sensor for sensing a bale on the loading device and a detector for detecting whether the table is ready to receive a bale, the control unit being configured such that when the bale sensor senses a bale on the loading device with the loading device in the pick-up position (a) if the detector detects that the table is not ready to receive a bale, the loading device is brought to the carrying position, and (b) if the detector detects that the table is ready to receive a bale, the loading device is brought to the loading position.

The invention makes operation of the bale wrapper easier and requires less attention from the operator. It also reduces the risk of damage being caused to the machine or to the bale by incorrect commands being sent by the operator.

Advantageously, the bale wrapper apparatus is operable to wrap a bale supported on the table while the loading device is carrying a bale in the carrying position. The invention thus allows for carrying of one bale while another bale is still being wrapped, thus permitting more efficient operation.

Advantageously, the control unit is configured such that when the bale sensor senses a bale on the loading device with the loading device in the carrying position, and the detector detects that the table is ready to receive a bale, the loading device is brought to the loading position. The bale is thus transferred automatically to the wrapping table as soon as it is ready to receive another bale.

The detector may include at least one sensor that senses when the table is ready to receive a bale. For example, the detector may include a sensor for detecting whether there is a bale on the wrapping table and/or whether the wrapping table is in the correct position to receive a bale. Alternatively or in addition, the detector may include a data processing device, which deduces whether the table is ready to receive a bale from control signals issued by the control unit.

Advantageously, the control unit is configured to halt movement of the loading device if the bale sensor signal is interrupted. Advantageously, the control unit is configured to prevent further movement of the loading device after halting movement thereof, until it receives a reset signal. These are safety features that help to reduce the risk of injury to a human operator if the bale sensor is triggered accidentally.

Advantageously, the bale wrapper apparatus includes a first rotation mechanism for rotating the bale about a first axis that is substantially parallel to the ground, at least one dispenser for dispensing wrapping film to form successive overlapping windings on an outer surface of the bale, and a second rotation mechanism for applying relative rotation between the bale and the dispenser about a second axis that is substantially perpendicular to the first axis.

Advantageously, the first rotation mechanism includes a plurality of rollers for supporting the bale and rotating the bale about the first axis. Preferably, the bale wrapper apparatus includes at least one endless belt that extends around the rollers. Advantageously, the table is configured to be tilted to discharge a wrapped bale from the bale wrapper.

Advantageously, the second rotation mechanism comprises means for rotating the table about the second axis. In this embodiment, the bale wrapper is of the turntable type.

Alternatively, the second rotation mechanism comprises means for rotating the dispenser about the second axis. In this embodiment, the bale wrapper is of the satellite type.

According to another aspect of the present invention there is provided a method of wrapping a bale using a bale wrapper that includes a table for supporting a bale during a wrapping process, a loading device for loading a bale onto the table, and a control system that controls operation of the loading device, the method comprising sensing for the presence of a bale on the loading device, detecting whether the table is ready to receive a bale and, when a bale is sensed on the loading device with the loading device in a pick-up position (a) if the table is not ready to receive a bale, bringing the loading device to the carrying position, and (b) if the table is ready to receive a bale, bringing the loading device to the loading position.

Advantageously, the method comprises wrapping a bale supported on the table while the loading device is carrying a bale in the carrying position.

Advantageously, when a bale is sensed on the loading device with the loading device in the carrying position, and the table is ready to receive a bale, the loading device is brought to the loading position.

Advantageously, the method includes sensing when the table is ready to receive a bale. Alternatively, the method includes deducing when the table is ready to receive a bale.

Advantageously, the method includes halting movement of the loading device if the bale sensor signal is interrupted.

Advantageously, the method includes preventing further movement of the loading device after halting movement thereof, until a reset signal is received.

An embodiment of the invention will now be described by way of example with reference to the accompanying drawings, in which:
Figure 1 is a rear isometric view of a bale wrapper with a loading arm in a pick up position, in which it is about to pick up a bale;
Figure 2 is a front isometric view of the bale wrapper with the load arm in the pick up position beneath a first bale, and with a second bale on the turntable during a wrapping operation;
Figure 3 is a front isometric view of the bale wrapper with the load arm in a carrying condition, in which it is carrying a bale;
Figure 4 is a front isometric view of the bale wrapper with the load arm in a loading condition, in which it is loading a bale onto the turntable;
Figure 5 is a schematic diagram of a control system for the bale wrapper; and
Figure 6 is a flow diagram illustrating the logic steps of a control program for controlling operation of the loading arm.

The bale wrapper 2 shown in the drawings is of the turntable type, having a rotatable turntable 4 and a fixed film dispenser 6 for dispensing wrapping film onto the surface of a bale 8. The turntable 4 and the film dispenser 6 are mounted on a chassis 10, which is supported by two wheels 12 and has a drawbar 14 allowing it to be hitched behind a tractor or other suitable vehicle. A pivotable loading arm 16 is attached to one side of the chassis 10.

The bale wrapper 2 is arranged to pick up bales 8 from the ground and wrap the bales individually in wrapping film. The wrapped bales are then deposited on the ground either at a storage location (typically at the headland of a field), or at a location for later collection and transportation to a place of storage.

In the embodiment shown in the drawings, the bale wrapper 2 includes a turntable 4 for supporting a round bale 8. Although the bale 8 is generally referred to as a "round bale", it is actually cylindrical in shape. The turntable 4 is mounted for rotation about a substantially vertical axis V. The turntable 4 also includes a roller mechanism 18 for rotating the bale 8 about a substantially horizontal axis H, as described in more detail below. Drive units (not shown), for example hydraulic drive motors, are provided for driving rotation of the turntable 4 and the roller mechanism 18.

The roller mechanism 18 includes a pair of widely-spaced parallel rollers 20, 20' that are mounted on a turntable frame 22. At least one of these rollers 20 is arranged to be rotationally driven, for example by a hydraulic motor (not shown). The other roller 20' may be either driven or free-running. A number of loose fitting belts 24 are looped between the rollers 20, 20'. In this embodiment four belts 24 are provided. A vertical end roller 26 is provided at each end of the turntable to limit longitudinal movement of the bale relative to the turntable 4.

The chassis 10 carries a support arm 28 for the film dispensing apparatus 6. The film dispensing apparatus 6 is well-known and will not therefore be described in detail. Briefly, it includes a reel 30 of wrapping film, a pair of film tensioning rollers 32. During operation, the dispensing apparatus 6 dispenses wrapping film 34 onto the surface of the bale 8. Once the bale has been wrapped, the turntable 4 can be tilted rearwards, for example as described in GB2159489A, to deposit the wrapped bale on the ground, preferably at a storage location.

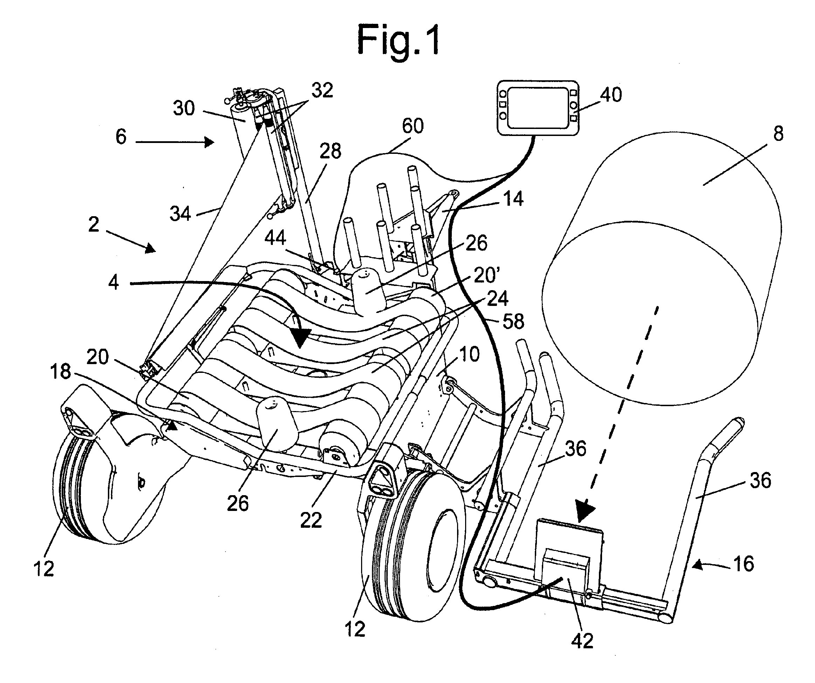

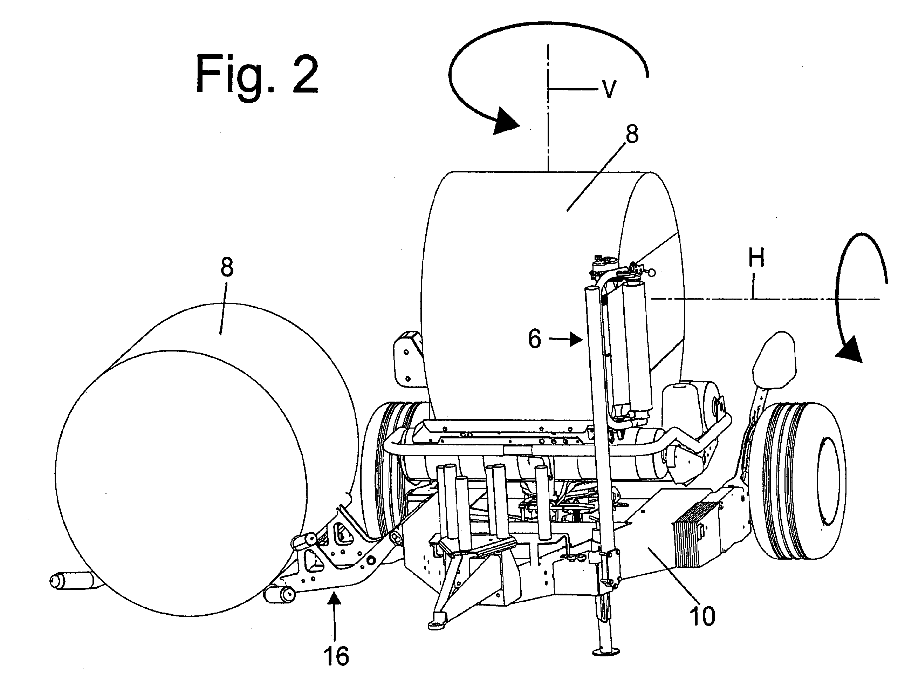

The bale wrapper 2 includes a pivotable loading arm 16 for picking up a bale 8 from the ground and lifting it onto the turntable 4. The loading arm 16 includes a pair of parallel fork arms 36 that may be positioned beneath a bale 8 as shown in Figures 1 and 2 in order to lift the bale from the ground. The loading arm 16 is pivotably attached to one side of the chassis 10 and its position can be adjusted by an actuator 38, for example a hydraulic piston. The loading arm 16 can thus be adjusted between three operating positions comprising:
1. a pick up position for picking up a bale from the ground;
2. an intermediate carrying position for carrying a bale prior to wrapping, and
3. a loading position for loading the bale onto the turntable for wrapping.

In Figures 1 and 2 the loading arm 16 is shown in the pick up position, in which it is located close to ground level (typically about 5cm above the ground) so that the fork arms 36 can be brought into position beneath a bale 8 that is standing on the ground by drawing the bale wrapper 2 forwards so that the fork arms 36 slide beneath the bale 8.

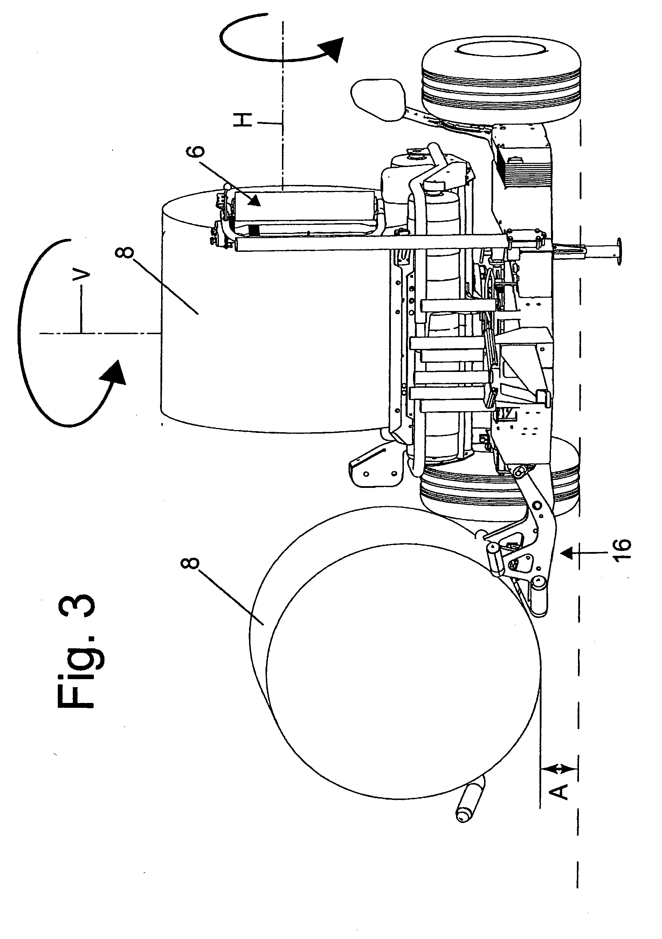

In Figure 3 the loading arm 16 is shown in the carrying position, in which it is raised above the ground, typically to provide a clearance A above the ground of about 30cm, so that the bale wrapper 2 can travel over the ground while carrying a bale 8, without the bale 8 or the loading arm 16 touching the ground.

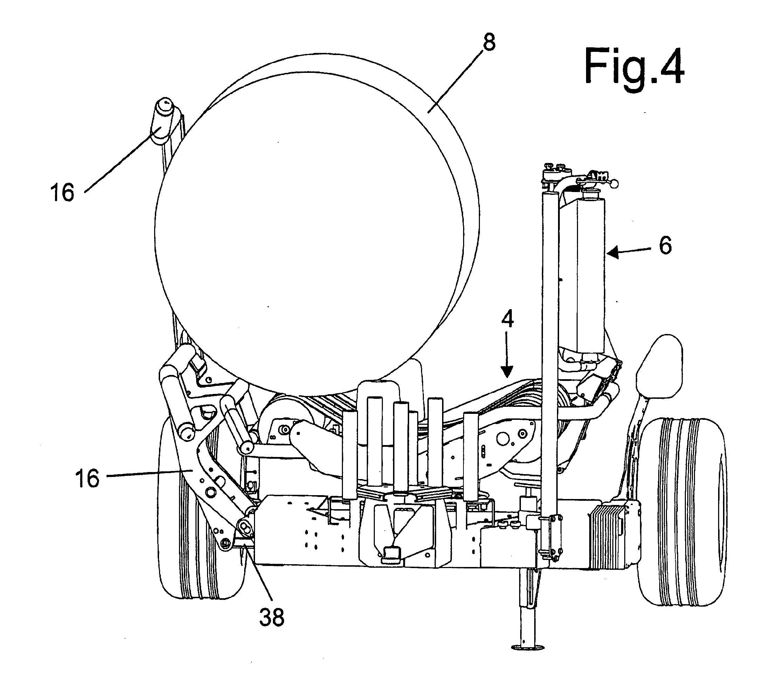

In Figure 4 the loading arm 16 is shown in the loading position, in which it has been raised to tip the bale 8 onto the turntable 4 for wrapping.

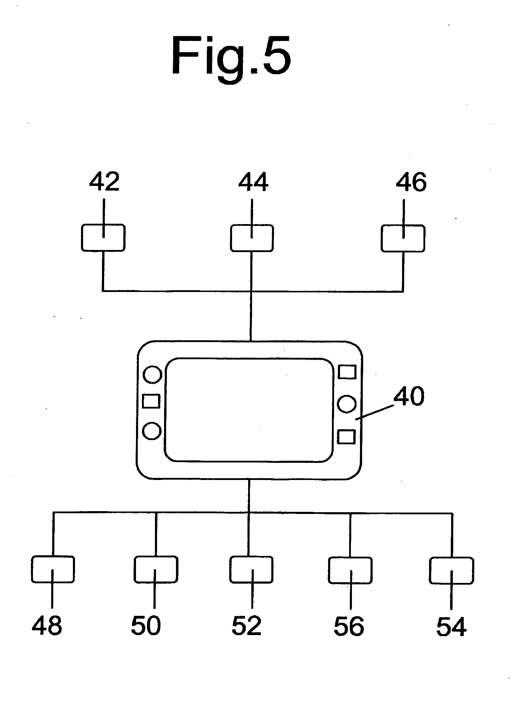

As shown in Figure 5, the bale wrapper includes a control system that includes a central control unit 40, which is connected to receive input signals from a bale sensor 42, a detector 44 associated with the table, and a manual control unit 46. The central control unit 40 is also connected to provide control signals to a plurality of control interfaces, including a turntable control interface 48, a roller control interface 50, a tilt control interface 52, an arm control interface 54 and (optionally) a dispenser control interface 56. The turntable control interface 48 and the roller control interface 50 are configured to control the drive motors that drive rotation of, respectively, the turntable 4 and the roller mechanism 18, thus controlling rotation of the bale 8 about the vertical axis **V** and the horizontal axis **H** during the wrapping operation.

The tilt control interface 52 is configured to control operation of the tilting mechanism that operates to tilt the turntable 4 and deposit the wrapped bale on the ground. The arm control interface 54 controls movement of the loading arm 16 between the three operating positions. The optional dispenser control interface 56, if provided, controls operation of the film dispenser 6.

As shown in Figure 1, the bale sensor 42 is mounted on the loading arm 16 and connected by a signal line 58 to the central control unit 40. The bale sensor 42 operates to sense the presence of a bale on the loading arm 16. Any suitable kind of sensor may be used for the bale sensor 42: for example it may be a load sensor that detects the weight of the bale, or an optical sensor or an ultrasonic sensor.

The detector 44 may be a physical sensor that senses the presence of a bale on the turntable 4, and/or a logical detector (a data processing device) that deduces whether the table is ready to receive a bale from operating control signals sent to the table control interfaces 48, 50, 52 from the control unit 40.

In the embodiment shown in Figures 1-4, the detector 44 is a physical sensor that is mounted on or adjacent the turntable 4, where it operates to detect the presence of a bale on the turntable. The detector 44 is connected to the central control unit 40 by a signal line 60. Again any suitable kind of sensor may be used for the detector 44, such as a load sensor, an optical sensor or an ultrasonic sensor. Optionally, the detector 44 may also be configured to sense when the turntable 4 is in the correct position to receive a bale 8, for example with the rollers 20 parallel to the longitudinal axis of the bale wrapper 2 as shown in Figure 1.

In use, a bale 8 is picked up by the loading arm 16, which is then pivoted to the loading position to deposit the bale on the turntable 4. As the bale 8 rotates on the turntable 4, film 34 is withdrawn from the film dispenser 6 and wound onto the surface of the bale 8. By rotating the turntable 4 about the vertical axis V while simultaneously driving the roller mechanism 18 to rotate the bale about the horizontal axis H, a series of overlapping layers of film are deposited on the surface of the bale 8, completely covering both the cylindrical surface and the round end faces of the bale so that it is hermetically sealed. After wrapping has been completed, the wrapped bale is deposited onto the ground by tilting the turntable 4, so that wrapping of the next bale can commence. These operations are all conventional and so will not be described further.

During wrapping of a first bale 8, the bale wrapper 2 can be pulled by a tractor to the location of a second bale, which is picked up by the loading arm 16 as previously described. The presence of the bale on the loading arm 16 is detected by the bale sensor 42, which sends a signal indicating the presence of a bale on the loading arm 16 to the central control unit 40. The central control unit 40 then sends an arm control signal to the arm control interface 54, which activates the hydraulic cylinder 38 causing the loading arm 16 to move to either the carrying position or the loading position.

The central control unit 40 is programmed to decide which arm control signal to send to the arm control interface 54 according to the latest signal received from the detector 44. If the signal from the detector 44 indicates that the table is not ready to receive a bale (for example, owing to the presence of a bale 8 on the turntable 4), the central control unit 40 sends an arm control signal to the arm control interface 54 causing the loading arm 16 to move from the pick up position to the carrying position. If the signal from the detector 44 indicates that the table is ready to receive a bale (because there is no bale on the turntable 4 and the turntable 4 is in the correct position to receive a bale), the central control unit 40 sends an arm control signal to the arm control interface 54 causing the loading arm 16 to move from the pick up position to the loading position, so that the bale is transferred onto the turntable 4. Wrapping of the bale can then commence immediately.

The loading arm 16 is thus controlled automatically either to carry the second bale in the carrying position or to load the bale onto the turntable 4, according to whether the turntable 4 is occupied or is ready to receive a bale 8.

When the loading arm 16 is carrying a bale, as detected by the bale sensor 42, the central control unit 40 is programmed to maintain the arm 16 in the carrying position while the turntable 4 remains occupied, as detected by the detector 44. The loading arm 16 will not therefore attempt to load a second bale onto the turntable while the turntable is occupied, and it will not move from the carrying position to the pick up position until the carried bale has been loaded onto the turntable.

Once wrapping has been completed and the wrapped bale has been deposited on the ground, the detector 44 detects that the turntable 4 is unoccupied and ready to receive another bale. The central control unit 40 then sends an arm control signal to the arm control interface 54, causing the loading arm to move from the carrying position to the loading position, thus lifting the carried bale 8 onto the turntable 4.

If the bale sensor 42 indicates that there is no bale on the loading arm 16, the central control unit 40 will maintain the loading arm 16 in the pick-up position, regardless of whether the turntable 4 is occupied or unoccupied, so that it is ready to pick up the next bale.

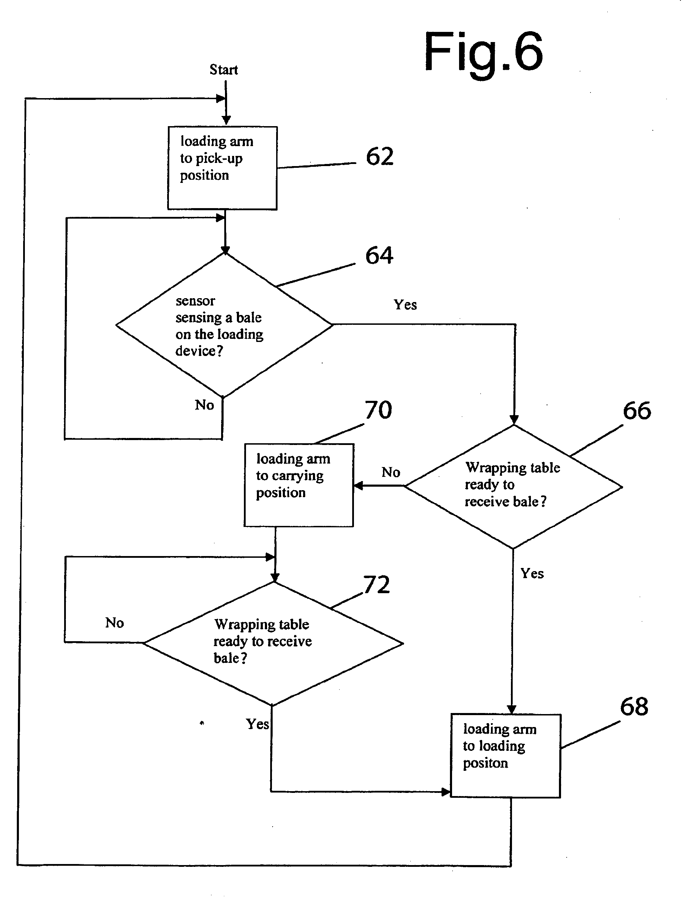

The logic system for controlling operation of the loading arm 16 is illustrated in Figure 6. At the start of operation the loading arm 16 is brought in step 62 to the pick-up position. In step 64, the logic system interrogates the signals received from the bale sensor 42 to ascertain whether a bale is sensed on the loading arm 16. If no bale is sensed, step 64 repeats at set intervals. If a bale is sensed, in step 66 the logic system interrogates the signals received from the detector 44 to ascertain whether the wrapping table 4 is ready to receive a bale. If the table is ready to receive a bale, at step 68 the loading arm is brought to the loading position to deposit the bale on the wrapping table 4.

If at step 66 it is found that the table 4 is not ready to receive a bale, at step 70 the loading arm is brought to the carrying position. In step 72 the logic system again interrogates the signals received from the detector 44 to ascertain whether the wrapping table 4 is ready to receive a bale. If the table is still not ready to receive a bale, step 72 repeats at set intervals. When the table is ready to receive a bale, at step 68 the loading arm is brought to the loading position to deposit the bale on the wrapping table 4.

After step 68, the logic system returns the loading arm to the pick-up position and the cycle repeats from step 62.

Optionally, the central control unit 40 may be programmed to respond to an over-ride signal from the manual control unit, which allows the loading arm 16 to be raised to the loading position when the turntable is unoccupied and there is no bale on the loading arm 16. This allows the loading arm 16 to be folded to a transportation position in which it does not protrude outwards to one side of the chassis 10, so allowing the bale wrapper 2 to be transported along narrow roads or through narrow doorways and gateways.

Optionally, the central control unit 40 may be programmed to halt movement of the loading arm 16 if the signal from the bale sensor 42 is interrupted. This is safety feature, which reduces the risk of injuring to a human operator who accidentally triggers the bale sensor 42, for example during cleaning or maintenance of the bale wrapper. If the bale sensor 42 is triggered, the central control unit 40 will normally send a signal to the arm control interface 54 causing the arm 16 to be lifted to either the carrying position or the loading position. However, if the signal from the bale sensor 42 is interrupted (as will normally happen if the sensor is triggered accidentally), the central control unit 40 is programmed to recognise this as an accidental trigger signal. In this situation, the central control unit 40 immediately halts operation of all motors and actuators to reduce the risk of causing an injury, and does not allow further operation of the bale wrapper until a reset signal is received from the manual control unit 46.

Various modifications of the invention are of course possible. For example, the detector 44 may consist of a data processing device that deduces whether the table is ready to receive a bale from the cycle of operating control signals issued by the control unit 40. For example, if the control unit has just issued a control signal causing the loading arm to lift a bale onto the wrapping table, the detector may deduce from this that the table is not ready to receive another bale. Alternatively, if the control unit has just issued a signal causing the wrapping table to tip a wrapped bale onto the ground, the detector 44 may deduce that the table is ready to receive another bale. The data processing device may consist of a physical data processing unit or it may be configured as software or firmware within the control unit 40. In the case of a turntable-type bale wrapper, the detector may also include a sensor for sensing that the turntable is in the correct position for receiving a bale.

The present invention may be embodied either in a dedicated bale wrapper apparatus or in a combined baler and wrapper machine. The principles of the invention as set out above may also be applied to bale wrappers of the either the turntable type or the satellite type.

## Claims

1. A bale wrapper apparatus (2) including a table (4) for supporting a bale (8) during a wrapping process, a loading device (16) for loading a bale onto the table, the loading device (16) being configured for movement between a pick-up position, a carrying position and a loading position, **characterized in that** a control system is configured to control operation of the loading device, said control system including a control unit (40), a bale sensor (42) for sensing a bale on the loading device and a detector (44) for detecting whether the table is ready to receive a bale, the control unit (40) being configured such that when the bale sensor senses a bale on the loading device (16) with the loading device in the pick-up position:
a. if the table is not ready to receive a bale, the loading device (16) is brought to the carrying position, and
b. if the table is ready to receive a bale, the loading device (16) is brought to the loading position.

2. A bale wrapper apparatus according to claim 1, wherein the bale wrapper apparatus is operable to wrap a bale supported on the table (4) while the loading device (16) is carrying a bale in the carrying position.

3. A bale wrapper apparatus according to claim 1 or claim 2, wherein the control unit (40) is configured such that when the bale sensor senses a bale on the loading device with the loading device in the carrying position, and the detector (44) detects that the table is ready to receive a bale, the loading device is brought to the loading position.

4. A bale wrapper apparatus according to any one of the preceding claims, in which the detector (44) comprises at least one sensor that senses when the table ready to receive a bale.

5. A bale wrapper apparatus according to any one of claims 1 to 3, in which the detector (44) includes a data processing device, which deduces whether the table is ready to receive a bale from control signals issued by the control unit.

6. A bale wrapper apparatus according to any one of the preceding claims, wherein the control unit (40) is configured to halt movement of the loading device if the bale sensor signal is interrupted.

7. A bale wrapper apparatus according to claim 6, wherein the control unit (40) is configured to prevent further movement of the loading device after halting movement thereof, until it receives a reset signal.

8. A bale wrapper apparatus according to any one of the preceding claims, wherein the loading device (16) includes a pivotable loading arm that is configured for movement between a pick-up position in which the arm is located close to the ground, a carrying position in which the arm is raised to provide a clearance above the ground, and a loading position in which the arm is raised to tip the bale onto the table.

9. A bale wrapper apparatus according to claim 8, wherein the bale sensor (42) is mounted on the loading arm for sensing a bale on the loading arm.

10. A method of wrapping a bale using a bale wrapper (2) that includes a table (4) for supporting a bale (8) during a wrapping process, a loading device (16) for loading a bale onto the table, **characterized in that** a control system controls operation of the loading device, said method comprising sensing for the presence of a bale on the loading device, detecting whether table is ready to receive a bale and, when a bale is sensed on the loading device with the loading device in a pick-up position:
a. if the table is not ready to receive a bale, bringing the loading device to a carrying position, and
b. if the table is ready to receive a bale, bringing the loading device to a loading position.

11. A method according to claim 10, comprising wrapping a bale supported on the table (4) while the loading device (16) is carrying a bale in the carrying position.

12. A method according to claim 10 or claim 11, wherein when a bale is sensed on the loading device with the loading device in the carrying position, and the table is ready to receive a bale, the loading device is brought to the loading position.

13. A method according to any one of claims 10 to 12, including sensing when the table is ready to receive a bale.

14. A method according to any one of claims 10 to 12, including deducing when the table is ready to receive a bale from control signals issued by the control unit.

15. A method according to any one of claims 10 to 14, including halting movement of the loading device if the bale sensor signal is interrupted.

16. A method according to claim 15, including preventing further movement of the loading device after halting movement thereof, until a reset signal is received.

## Patentansprüche

1. Ballenwickelvorrichtung (2) mit einem Tisch (4) zum Lagern eines Ballens (8) während eines Umwicklungsprozesses, einem Ladegerät (16) zum Laden eines Ballens auf den Tisch, wobei das Ladegerät (16) zur Bewegung zwischen einer Aufnahmestellung, einer Tragestellung und einer Ladestellung konfiguriert ist, **dadurch gekennzeichnet, dass** ein Steuersystem zum Steuern des Betriebs des Ladegeräts konfiguriert ist, wobei das genannte Steuersystem eine Steuereinheit (40), einen Ballensensor (42) zum Erfassen eines Ballens auf dem Ladegerät und einen Detektor (44) zum Erkennen, ob der Tisch zur Aufnahme eines Ballens bereit ist, beinhaltet, wobei die Steuereinheit (40) so konfiguriert ist, dass, wenn der Ballensensor bei in der Aufnahmestellung befindlichem Ladegerät einen Ballen auf dem Ladegerät (16) erfasst:
a. falls der Tisch nicht zur Aufnahme eines Ballens bereit ist, das Ladegerät (16) in die Tragestellung gebracht wird und,
b. falls der Tisch zur Aufnahme eines Ballens bereit ist, das Ladegerät (16) in die Ladestellung gebracht wird.

2. Ballenwickelvorrichtung nach Anspruch 1, wobei die Ballenwickelvorrichtung die Aufgabe hat, einen auf dem Tisch (4) gelagerten Ballen zu umwickeln, während das Ladegerät (16) einen Ballen in der Tragestellung trägt.

3. Ballenwickelvorrichtung nach Anspruch 1 oder Anspruch 2, wobei die Steuereinheit (40) so konfiguriert ist, dass, wenn der Ballensensor bei in der Tragestellung befindlichem Ladegerät einen Ballen auf dem Ladegerät erfasst und der Detektor (44) erkennt, dass der Tisch zur Aufnahme eines Ballens bereit ist, das Ladegerät in die Ladestellung gebracht wird.

4. Ballenwickelvorrichtung nach einem der vorhergehenden Ansprüche, bei welcher der Detektor (44) wenigstens einen Sensor aufweist, der erfasst, wenn der Tisch zur Aufnahme eines Ballens bereit ist.

5. Ballenwickelvorrichtung nach einem der Ansprüche 1 bis 3, bei welcher der Detektor (44) eine Datenverarbeitungseinrichtung beinhaltet, die aus von der Steuereinheit ausgegebenen Steuersignalen ableitet, ob der Tisch zur Aufnahme eines Ballens bereit ist.

6. Ballenwickelvorrichtung nach einem der vorhergehenden Ansprüche, wobei die Steuereinheit (40) konfiguriert ist, um die Bewegung des Ladegeräts anzuhalten, wenn das Ballensensorsignal unterbrochen wird.

7. Ballenwickelvorrichtung nach Anspruch 6, wobei die Steuereinheit (40) konfiguriert ist, um eine weitere Bewegung des Ladegeräts nach dem Anhalten seiner Bewegung zu verhindern, bis sie ein Reset-Signal erhält.

8. Ballenwickelvorrichtung nach einem der vorhergehenden Ansprüche, wobei das Ladegerät (16) einen verschwenkbaren Ladearm beinhaltet, der zur Bewegung zwischen einer Aufnahmestellung, in welcher der Arm sich nahe am Boden befindet, einer Tragestellung, in welcher der Arm angehoben ist, um einen Bodenabstand bereitzustellen, und einer Ladestellung, in welcher der Arm angehoben ist, um den Ballen auf den Tisch zu kippen, konfiguriert ist.

9. Ballenwickelvorrichtung nach Anspruch 8, wobei der Ballensensor (42) am Ladearm montiert ist, um einen Ballen auf dem Ladearm zu erfassen.

10. Verfahren zum Umwickeln eines Ballens unter Verwendung eines Ballenwicklers (2) , der einen Tisch (4) zum Lagern eines Ballens (8) während eines Umwicklungsprozesses und ein Ladegerät (16) zum Laden eines Ballens auf den Tisch beinhaltet, **dadurch gekennzeichnet, dass** ein Steuersystem den Betrieb des Ladegeräts steuert, wobei das genannte Verfahren das Erfassen der Anwesenheit eines Ballens auf dem Ladegerät, das Erkennen, ob der Tisch zur Aufnahme eines Ballens bereit ist, und, wenn bei in der Aufnahmestellung befindlichem Ladegerät ein Ballen auf dem Ladegerät erfasst wird:
a. falls der Tisch nicht zur Aufnahme eines Ballens bereit ist, Bringen des Ladegeräts in eine Tragestellung und,
b. falls der Tisch zur Aufnahme eines Ballens bereit ist, Bringen des Ladegeräts in eine Ladestellung.

11. Verfahren nach Anspruch 10, umfassend das Umwickeln eines auf dem Tisch (4) gelagerten Ballens, während das Ladegerät (16) einen Ballen in der Tragestellung trägt.

12. Verfahren nach Anspruch 10 oder Anspruch 11, wobei, wenn bei in der Tragestellung befindlichem Ladegerät ein Ballen auf dem Ladegerät erfasst wird und der Tisch zur Aufnahme eines Ballens bereit ist, das Ladegerät in die Ladestellung gebracht wird.

13. Verfahren nach einem der Ansprüche 10 bis 12, einschließlich des Erfassens, wenn die Tabelle zur Aufnahme eines Ballens bereit ist.

14. Verfahren nach einem der Ansprüche 10 bis 12, einschließlich des Ableitens aus von der Steuereinheit ausgegebenen Steuersignalen, wenn die Tabelle zur Aufnahme eines Ballens bereit ist.

15. Verfahren nach einem der Ansprüche 10 bis 14, einschließlich des Anhaltens der Bewegung des Ladegeräts, wenn das Ballensensorsignal unterbrochen wird.

16. Verfahren nach Anspruch 15, einschließlich des Verhinderns einer weiteren Bewegung des Ladegeräts nach dem Anhalten seiner Bewegung, bis ein Reset-Signal erhalten wird.

## Revendications

1. Enrubanneuse (2) comprenant une table (4) servant à soutenir une balle (8) au cours d'un processus d'enrubannage, un appareil de chargement (16) servant à charger une balle sur la table, l'appareil de chargement (16) pouvant se déplacer entre une position de ramassage, une position de portage et une position de chargement, **caractérisée en ce qu'**un système de commande commande le fonctionnement de l'appareil de chargement, ledit système de commande comprenant une unité de commande (40), un capteur de balle (42) servant à détecter une balle sur l'appareil de chargement et un détecteur (44) servant à détecter si la table peut accepter une balle, l'unité de commande (40) étant configurée de sorte à ce que, lorsque le capteur de balle détecte une balle sur l'appareil de chargement (16) alors que celui-ci est en position de ramassage :
a. si la table ne peut pas accepter une balle, l'appareil de chargement (16) est mis en position de portage, et
b. si la table peut accepter une balle, l'appareil de chargement (16) est mis en position de chargement.

2. Enrubanneuse selon la revendication 1, dans laquelle l'enrubanneuse peut enrubanner une balle soutenue sur la table (4) lorsque l'appareil de chargement (16) porte une balle en position de portage.

3. Enrubanneuse selon la revendication 1 ou 2, dans laquelle l'unité de commande (40) est configurée de sorte à ce que, lorsque le capteur de balle détecte une balle sur l'appareil de chargement alors que celui-ci est en position de portage, et que le détecteur (44) détecte que la table peut accepter une balle, l'appareil de chargement est mis en position de chargement.

4. Enrubanneuse selon l'une quelconque des revendications précédentes, dans laquelle le détecteur (44) comprend au moins un capteur qui détecte si la table peut accepter une balle.

5. Enrubanneuse selon l'une quelconque des revendications 1 à 3, dans laquelle le détecteur (44) comprend un appareil de traitement de données qui déduit si la table peut accepter une balle à partir de signaux de commande émis par l'unité de commande.

6. Enrubanneuse selon l'une quelconque des revendications précédentes, dans laquelle l'unité de commande (40) peut arrêter le mouvement de l'appareil de chargement si le signal du capteur de balle est interrompu.

7. Enrubanneuse selon la revendication 6, dans laquelle l'unité de commande (40) peut empêcher tout mouvement ultérieur de l'appareil de chargement une fois que celui-ci est arrêté, jusqu'à ce qu'elle reçoive un signal de réinitialisation.

8. Enrubanneuse selon l'une quelconque des revendications précédentes, dans laquelle l'appareil de chargement (16) comprend un bras de chargement pivotant pouvant se déplacer entre une position de ramassage dans laquelle le bras se trouve près du sol, une position de portage dans laquelle le bras s'élève pour laisser un espace au-dessus du sol, et une position de chargement dans laquelle le bras s'élève pour placer la balle sur la table.

9. Enrubanneuse selon la revendication 8, dans laquelle le capteur de balle (42) est installé sur le bras de chargement afin de détecter une balle sur le bras de chargement.

10. Procédé d'enrubannage d'une balle à l'aide d'une enrubanneuse (2) comprenant une table (4) servant à soutenir une balle (8) au cours d'un processus d'enrubannage, un appareil de chargement (16) servant à charger une balle sur la table, **caractérisé en ce qu'**un système de commande commande le fonctionnement de l'appareil de chargement, ledit procédé comprenant la détection de la présence d'une balle sur l'appareil de chargement, la détection de la capacité de la table à accepter une balle et, lorsqu'une balle est détectée sur l'appareil de chargement alors que celui-ci est en position de ramassage :
a. si la table ne peut pas accepter une balle, la mise de l'appareil de chargement en position de portage, et
b. si la table peut accepter une balle, la mise de l'appareil de chargement en position de chargement.

11. Procédé selon la revendication 10, comprenant l'enrubannage d'une balle soutenue sur la table (4) lorsque l'appareil de chargement (16) porte une balle en position de portage.

12. Procédé selon la revendication 10 ou 11, dans lequel, lorsqu'une balle est détectée sur l'appareil de chargement alors que celui-ci est en position de portage, et que la table peut accepter une balle, l'appareil de chargement est mis en position de chargement.

13. Procédé selon l'une quelconque des revendications 10 à 12, comprenant la détection de la capacité de la table à accepter une balle.

14. Procédé selon l'une quelconque des revendications 10 à 12, comprenant la déduction de la capacité de la table à accepter une balle à partir de signaux de commande émis par l'unité de commande.

15. Procédé selon l'une quelconque des revendications 10 à 14, comprenant l'arrêt du mouvement de l'appareil de chargement si le signal du capteur de balle est interrompu.

16. Procédé selon la revendication 15, comprenant la restriction de tout mouvement ultérieur de l'appareil de chargement une fois que celui-ci est arrêté, jusqu'à la réception d'un signal de réinitialisation.
